# FASCICULE DE BREVET EUROPEEN

(11) **EP 3 267 168 B1**
(45) Date de publication et mention de la délivrance du brevet: **26.08.2020**
(21) Numéro de dépôt: 17177741.0
(22) Date de dépôt: 23.06.2017
(51) Int. Cl.: G01L 5/00, B60N 2/00, G01G 19/414, B60R 21/015, G01G 3/08, G01L 1/04, B60N 2/70

(54) **DISPOSITIF APTE A DÉTECTER UNE FORCE D APPUI**
VORRICHTUNG ZUM ERKENNEN EINER AUFLAGEKRAFT
DEVICE CAPABLE OF DETECTING A BEARING FORCE

(30) Priorité: 06.07.2016 FR 1656499
(43) Date de publication de la demande: 10.01.2018
(73) Titulaire: Crouzet Automatismes, 26000 Valence (FR)
(72) Inventeur: LAUGT, Dorian, 26100 ROMANS-SUR-ISERE (FR); NIGUET, Ludovic, 07130 TOULAUD (FR); DUVALLET, Patrick, 78280 GUYANCOURT (FR)
(74) Mandataire: Colombo, Michel

(56) Documents cités:
- WO-A1-99/41565
- WO-A2-02/18892
- DE-A1-102013 213 672

## Description

L'invention concerne un dispositif apte à détecter une force d'appui. L'invention concerne également une assise d'un siège et un siège incorporant ce dispositif.

Dans cette description, par « dispositif apte à détecter une force d'appui» et par « dispositif de détection d'une force d'appui», on désigne aussi bien :
- un dispositif uniquement capable de délivrer une information binaire, à savoir, en alternance, la présence et l'absence de la force d'appui, ou
- un dispositif capable, en plus de mesurer l'amplitude de la force d'appui et/ou de mesurer le déplacement provoqué par la force d'appui.

De tels dispositifs de détection sont par exemple utilisés pour détecter la présence d'un passager assis dans un siège d'un véhicule automobile. Un exemple d'un tel dispositif de détection est décrit dans la demande US7049974B2. Comme l'indique ce brevet, il est souhaitable de réduire l'encombrement de tels dispositifs de détection. Il est également souhaitable d'en simplifier au maximum l'architecture pour en simplifier la fabrication et son assemblage dans l'application finale et donc en diminuer les coûts.

Or, comme l'illustre le mode de réalisation de la figure 2 de US7049974B2, les dispositifs de détection connus comportent de nombreuses pièces emboîtées les unes dans les autres qui se déplacent les unes par rapport aux autres afin de détecter la force d'appui.

De l'état de la technique est également connu de :
- WO99/41565A1,
- DE102013213672A1,
- WO02/18892A2.

L'invention vise à proposer un tel dispositif de détection plus simple à fabriquer. Elle a donc pour objet un dispositif apte à détecter une force d'appui conforme à la revendication 1.

Le dispositif revendiqué est particulièrement simple à fabriquer car la lame remplit simultanément les fonctions suivantes :
- la fonction de face d'appui sur laquelle s'exerce directement la force d'appui à détecter, et
- la fonction de bielle qui transforme un mouvement parallèle à la direction d'enfoncement en un mouvement perpendiculaire à cette direction d'enfoncement.

De plus, le fait transformer le mouvement parallèle à la direction d'enfoncement en un mouvement perpendiculaire à cette direction rend possible une réduction de la hauteur du dispositif, c'est-à-dire de l'encombrement du dispositif dans la direction d'enfoncement. En effet, pour certaine application, comme par exemple la détection d'un passager assis dans un siège, la hauteur du dispositif doit être limitée. Avec le dispositif revendiqué, le capteur qui détecte le déplacement de l'extrémité distale libre de la lame peut être placé à côté de la lame et non pas sous la pièce mobile déplacée par la force d'appui comme dans les dispositifs conventionnels. Cela permet donc, si cela est souhaité, de réduire la hauteur du dispositif.

Les modes de réalisation de ce dispositif de détection peuvent comporter une ou plusieurs des caractéristiques des revendications dépendantes.

Ces modes de réalisation du dispositif de détection peuvent présenter en outre un ou plusieurs des avantages suivants :
- Le fait d'utiliser une lame ressort permet de remplir à la fois les fonctions de la lame et du ressort à l'aide d'une seule pièce. Cela simplifie donc la réalisation du dispositif puisque le même ressort à lame remplit à la fois les fonctions de la lame et du ressort.
- Le fait de placer le capteur à côté de l'extrémité distale qui se déplace permet de réduire la hauteur du dispositif. En effet, le capteur n'a plus à être placé sous la pièce mobile qui est déplacée dans la direction d'enfoncement. Au contraire, ici, le capteur est placé à côté, dans une direction perpendiculaire à la direction d'enfoncement de cette pièce mobile, à savoir à côté de la lame. Cela permet donc de réduire la hauteur totale du dispositif de détection.
- Le fait d'utiliser une lame dont le rapport f/L est inférieur à 0,5 permet de réduire encore plus l'encombrement du dispositif. En effet, à cause de sa conformation cintrée initiale, le débattement de l'extrémité distale de la lame est plus petit que le débattement de la lame dans la direction d'enfoncement. Le capteur doit donc détecter un déplacement de plus petite amplitude que s'il devait détecter le débattement de la lame dans la direction d'enfoncement. Cela permet d'utiliser un capteur de plus petite taille et donc de réduire l'encombrement du dispositif. De plus, le réglage précis de ce rapport f/L permet d'ajuster le débattement de l'extrémité distale à l'amplitude des déplacements que le capteur peut détecter.
- Le fait que le support rigide soit plan permet également de réduire encore plus la hauteur du dispositif.
- Le fait d'utiliser un mécanisme de guidage réalisé par la seule coopération d'un plan d'appui et d'une butée permet de simplifier le dispositif.
- Le fait que la distance la plus courte entre les extrémités proximale et distale soit supérieure à 7 cm augmente la sensibilité du dispositif dans la direction de translation de l'extrémité distale libre. Cela facilite l'utilisation de ce dispositif dans l'assise d'un siège pour détecter la présence d'un passager assis sur ce siège.

L'invention a également pour objet une assise d'un siège et un siège comportant le dispositif revendiqué.

Le fait de placer le dispositif de détection de la force d'appui à l'intérieur du bloc de mousse permet d'éviter de perturber le confort de l'occupant assis sur cette assise. Cela évite aussi de perturber l'implantation et le fonctionnement d'autres appareils incorporés à l'assise comme, par exemple, des nappes chauffantes, une ventilation ou un mécanisme de massage de l'occupant. Enfin, cela limite les contraintes imposées sur le design de l'assise. En particulier, l'implantation du dispositif de détection à l'intérieur du bloc de mousse permet de réaliser les rappels de garniture et les coutures de l'assise à n'importe quel endroit.

Le fait de placer le dispositif de détection dans l'un des quarts arrières de l'assise comme revendiqué, permet de détecter de façon plus fiable un occupant assis sur le siège ou un enfant assis dans un siège enfant. En effet, en plaçant le dispositif de détection de cette façon, on limite le nombre de détections accidentelles provoquées soit par un objet inerte de forme quelconque ou soit par un enfant assis dans un siège fixé sur cette assise par un mécanisme de fixation conforme au standard ISOFIX.

L'invention sera mieux comprise à la lecture de la description qui va suivre, donnée uniquement à titre d'exemple non limitatif et faite en se référant aux dessins sur lesquels :
- la figure 1 est une illustration schématique et en coupe verticale d'un véhicule automobile comportant un siège ;
- la figure 2 est une illustration, en vue de dessus, de l'assise du siège arrière du véhicule de la figure 1 ;
- la figure 3 est une illustration partielle, en coupe verticale, de l'assise de la figure 2 ;
- la figure 4 est une illustration en perspective d'un dispositif de détection logé dans l'assise de la figure 3 ;
- la figure 5 est une illustration, en vue de côté, du dispositif de la figure 4 ;
- la figure 6 est une illustration, en vue de dessus, du dispositif de la figure 4 ;
- les figures 7 à 12 sont des illustrations en perspective d'autres modes de réalisation possibles du dispositif de détection de la figure 4 ;
- la figure 13 est une illustration schématique, en coupe verticale, d'un autre positionnement possible du dispositif de détection à l'intérieur d'une assise ;
- la figure 14 est aussi une illustration schématique, en perspective, d'un autre positionnement possible du dispositif de détection de la figure 4 dans l'assise d'un siège.

Dans ces figures, les mêmes références sont utilisées pour désigner les mêmes éléments. Dans la suite de cette description, les caractéristiques et fonctions bien connues de l'homme du métier ne sont pas décrites en détail.

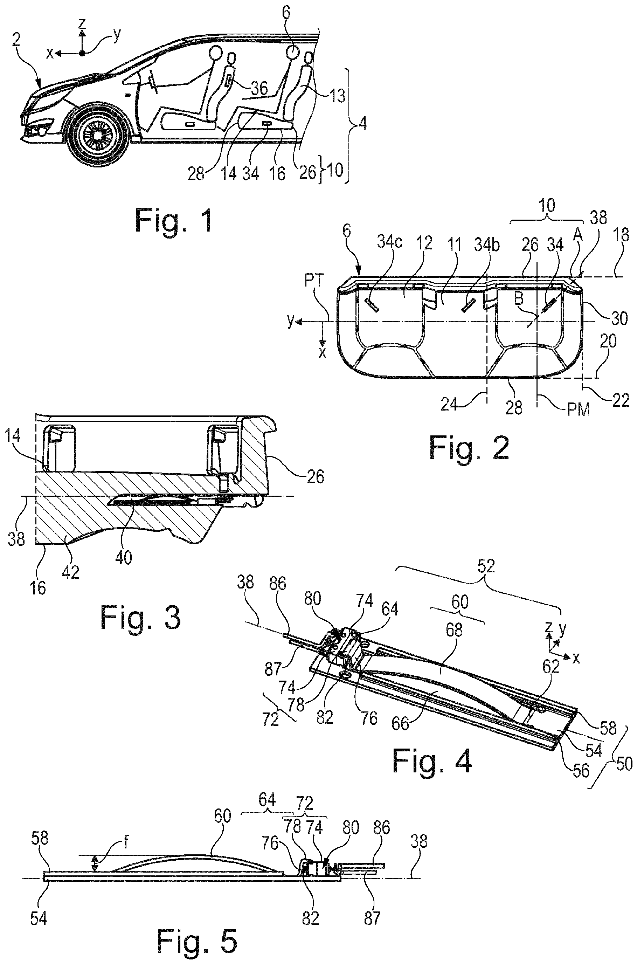

La figure 1 représente un véhicule automobile 2 équipé d'un siège 4 sur lequel est assis un passager 6. Sur la figure 1, le passager 6 est un passager arrière du véhicule 2 et le siège 4 est une banquette arrière de ce véhicule 2. Toutefois, tout ce qui est décrit par la suite s'applique à n'importe quel autre siège d'un véhicule automobile, et, en particulier, aux sièges avant du véhicule 2.

Le siège 4 va maintenant être décrit plus en détail en référence aux figures 1 et 2. Le siège 4 comporte trois assises 10, 11 et 12 (figure 2) disposées les unes à côté des autres dans une direction Y horizontale d'un repère orthogonal XYZ. Le siège 4 comporte également un dossier 13 (figure 1). Dans ces figures 1 et 2 comme dans les figures suivantes, l'horizontal est repéré par des directions X et Y du repère XYZ. La direction X est ici parallèle à la direction longitudinale du véhicule 2, c'est-à-dire la direction dans laquelle le véhicule 2 avance en ligne droite. La direction Z est la direction verticale. Par la suite, les termes tels que « supérieur », « inférieur », « haut », « bas », « au-dessus », et « au-dessous » sont définis par rapport à la direction Z.

Ici, on appelle « assise » l'emplacement du siège 4 destiné à recevoir le postérieur d'un seul passager. Par la suite, seule l'assise 10 est décrite en détail sachant que l'enseignement donné dans ce cas particulier s'applique également à toute autre assise de ce siège.

L'assise 10 comporte une face supérieure 14 (figure 1) sur laquelle repose directement le postérieur du passager 6 et une face inférieure 16 située du côté opposé. Les faces 14 et 16 s'étendent principalement parallèlement au plan horizontal XY.

La projection orthogonale de l'assise 10 dans le plan horizontal XY est située à l'intérieur d'un rectangle. Ce rectangle est le rectangle de plus petite surface qui contient entièrement cette projection orthogonale. Ce rectangle présente :
- un côté arrière 18,
- un côté avant 20, et
- deux côtés latéraux 22 et 24 (figure 2).

Les côtés 18 et 20 sont parallèles à la direction Y. Ils passent, respectivement, par un bord arrière 26 et un bord avant 28 de l'assise 10. Le bord arrière 26 est celui qui est le plus proche du dossier 13. Ce bord est généralement relié à ce dossier 13. Le bord avant 28 est situé du côté opposé au bord 26 dans la direction X. Les côtés 18 et 20 sont les symétriques l'un de l'autre par rapport à un plan vertical transversal PT.

Les côtés latéraux 22 et 24 sont situés de part et d'autre de l'emplacement où s'assoit le passager 6. Ils sont symétriques l'un de l'autre par rapport à un plan vertical médian PM de l'assise 10. Dans le cas représenté ici où l'assise 10 est l'assise la plus à droite du siège 4, le côté latéral 22 se situe au niveau d'un bord latéral droit 30 de l'assise 10.

Dans le cas d'une banquette, le côté latéral 24 ne correspond pas à un bord de l'assise. Par contre, le côté latéral 24 est confondu avec le côté latéral droit de l'assise centrale 11 du siège 4. Ainsi, dans le cas où l'assise considérée est l'assise centrale 11 d'une banquette, aucun des côtés latéraux ne correspond à un bord du siège 4.

Les plans PT et PM se coupent le long d'un axe qui passe par le centre du rectangle. Ils découpent aussi ce rectangle qui entoure l'assise 10 en quatre quarts identiques.

Il est utile de détecter la présence d'un passager assis sur l'assise 10 pour commander en fonction de cette information un ou plusieurs appareils électroniques du véhicule 2. À cet effet, l'assise 10 comporte un dispositif 34 de détection de la force d'appui exercée par le poids du passager 6 lorsqu'il est assis sur l'assise 10. La force d'appui s'exerce principalement verticalement du haut vers le bas.

À titre d'illustration, le dispositif 34 est utilisé ici pour commander le déclenchement du gonflement d'un airbag 36 (figure 1) également parfois appelé « coussin gonflable ». Par exemple, l'airbag 36 est logé dans une paroi latérale ou dans un tableau de bord du véhicule 2. Ainsi, lorsque le dispositif 34 détecte l'absence d'une force d'appui suffisante, le déclenchement de l'airbag 36 est par exemple inhibé.

Typiquement, pour ne pas inhiber accidentellement le déclenchement de l'airbag 36 ou au contraire ne pas autoriser accidentellement le déclenchement de cet airbag 36, il faut que le dispositif 34 respecte les contraintes suivantes :
- détecter la présence d'un passager de plus de 29 kg assis sur l'assise 10,
- détecter la présence d'un enfant assis sur un siège enfant qui lui-même repose sur l'assise 10 lorsque le poids du siège enfant et de l'enfant est supérieur à 15 kg,
- ne pas détecter un objet, dont le poids est inférieur à 5 kg, déposé sur l'assise 10, et
- ne pas détecter un enfant assis dans un siège enfant fixé sur l'assise 10 par un mécanisme d'ancrage conforme à la norme ISOFIX (norme ISO 13216-1 : 1999) ou conforme à la norme américaine LATCH (« Lower Anchors and Tethers for Children »).

Pour cela, le dispositif 34 est un dispositif comportant une face longiligne 68 (figure 4) sensible à la force d'appui. Cette face 68 s'étend principalement le long d'un axe horizontal 38.

Pour respecter les contraintes énoncées ci-dessus, le dispositif 34 est disposé dans l'un des deux quarts arrières du rectangle délimité par les côtés 18, 20, 22 et 24. Ici, le dispositif 34 est disposé à l'intérieur du quart arrière droit. Plus précisément, le dispositif 34 est disposé à l'intérieur de l'assise 10 de telle manière à ce que la projection orthogonale de l'axe 38 dans le plan horizontal XY passe par des points A et B. Le point A est situé à une distance d_{A} du sommet du rectangle situé à l'intersection des côtés 18 et 22. Le point B est situé à une distance dB du centre du rectangle. Ici, les distances d_{A} et d_{B} sont toutes les deux inférieure à 0,2dₐᵣ ou à 0,1dₐᵣ, où la distance dₐᵣ est la longueur du côté 18 du rectangle. Typiquement, la distance dₐᵣ est comprise entre 45 et 60 cm..

Ici, le point B est situé dans le plan PM. Par exemple, il est situé entre 1,5 cm et 5 cm en avant de la projection du point H sur le plan XY. La position du point H est connue de l'homme du métier. On rappelle simplement ici que le point H est le point situé à l'intersection du plan PM, du plan contenant la colonne vertébrale du passager 6 et du plan contenant les fémurs du passager 6. Le plan contenant la colonne vertébrale est un plan vertical, parallèle à la direction X, et qui contient l'essentiel de la colonne vertébrale du passager 6 lorsqu'il est assis sur l'assise 10 et adosser au dossier 13. Le plan contenant les fémurs est un plan horizontal, parallèle au plan XY, et passant par les axes des deux fémurs du passager 6 dans la même position que celle définie pour le plan de la colonne vertébrale.

Ici, le dispositif 34 est disposé à une distance dB34 du point B. La distance dB34 est supérieure à 2 ou 3 cm et généralement inférieure à 10 cm ou 6 cm. Par exemple, la distance dB34 est égale à 4,5 cm.

Sur la figure 2, des dispositifs de détection 34b et 34c, logés à l'intérieur, respectivement, des assises 11 et 12 sont visibles. Leur positionnement à l'intérieur de leur assise respective se déduit des explications précédentes.

La figure 3 représente une vue partielle en coupe verticale de l'assise 10 le long de l'axe 38. Dans cet exemple de mode de réalisation, l'assise 10 comporte un logement horizontal 40 qui s'étend principalement le long de l'axe 38. Le dispositif 34 est logé à l'intérieur de ce logement 40. Ici, le logement 40 est creusé à l'intérieur d'un bloc 42 de mousse de l'assise 10. Par exemple, ce logement est creusé depuis le bord arrière 26 de cette assise 10. Typiquement, le bloc 42 de mousse présente une dureté Shore sur l'échelle A inférieure à 50 et, de préférence, inférieure à 30. Généralement, la dureté Shore sur l'échelle A du bloc 42 est supérieure ou égale à 10 ou 20. Par la suite, par « matériaux souples », on désigne tous matériaux dont la dureté est comprise dans les limites définies pour le bloc 42 de mousse.

Les bords et la face supérieure du bloc 42 sont généralement recouverts d'un revêtement tel que du cuir véritable ou artificiel ou encore d'un tissu.

Le logement 40 est situé à au moins 1 cm ou 2 cm sous la face supérieure 14. Ici, il est situé entre 2,5 cm et 4 cm sous cette face 14. Grâce à cela, la présence du dispositif 34 ne peut pas être ressentie par le passager 6 lorsqu'il est assis sur l'assise 10. Le logement 40 est également situé à au moins 1 cm ou 2 cm au-dessus de la face intérieure 16 de l'assise 10. Grâce à cela, le logement 40 creusé dans le bloc 42 suffit à lui seul pour maintenir le dispositif 34 en place. En particulier, il n'est pas nécessaire de fixer en plus le dispositif 34 sur une armature du siège 4 ou sur une nappe de suspension. Cela simplifie donc l'installation du dispositif 34 à l'intérieur de l'assise 10.

Le dispositif 34 va maintenant être décrit plus en détail en référence aux figures 4 à 6. Le dispositif 34 comporte :
- un support rigide 50 qui s'étend principalement dans un plan horizontal, et
- un ressort à lame 52.

Le support 50 comporte une plaque plane horizontale 54 rigide en traction. Par « rigide en traction » ou simplement par « rigide », on désigne un support dont la rigidité en traction est telle que, en réponse à la force maximale d'allongement exercée par la lame du ressort à lame 52 sur ce support, l'allongement du support dans la direction de cette force reste inférieur à L_{S}/10 ou L_{S}/100 ou L_{S}/1000, où L_{S} est la longueur du support dans cette direction lorsque la lame du ressort à lame n'exerce aucune force d'allongement. Ici, le support 50 est également rigide en flexion, c'est-à-dire plus rigide en flexion et, de préférence deux ou dix fois plus rigide en flexion, que le ressort à lame 52 A cet effet, ici, la section horizontale de la plaque 54 est rectangulaire. Les plus grands côtés de la plaque 54 s'étendent parallèlement à l'axe 38. L'épaisseur de la plaque 54 est par exemple supérieure ou égale à 0,7 mm ou 1 mm. Cette plaque est réalisé dans un matériau dur comme un métal tel qu'un acier ou un plastique dur. Par « matériau dur » on désigne dans cette description un matériau dont le module de Young à 25°C est supérieur à 1 GPa et, de préférence, supérieur à 10 GPa ou 50 GPa ou 100 GPa.

Dans cet exemple de mode de réalisation, pour limiter encore plus la déformation en flexion de la plaque 54 lorsqu'elle est soumise à une force d'appui verticale, des nervures rectilignes 56 et 58 parallèles à l'axe 38 sont réalisées sur l'une des faces horizontales de cette plaque 54. L'épaisseur de ces nervures 56, 58 est par exemple supérieure ou égale à l'épaisseur de la plaque 54. Ces nervures 56 et 58 s'étendent sur au moins 50 % et, de préférence, au moins 70 % ou 80 %, de la longueur de la plaque 54 dans une direction parallèle à l'axe 38. Ici, la longueur de la plaque 54 dans une direction parallèle à l'axe 38 est supérieure ou égale à 8 cm ou 10 cm et, généralement, inférieure à 20 cm ou 15 cm. La largeur de la plaque 54 dans une direction horizontale perpendiculaire à l'axe 38 est généralement inférieure à 3 cm ou 5 cm.

Dans ce mode de réalisation, le ressort 52 comporte une seule lame 60 qui s'étend, principalement le long de l'axe 38, depuis une extrémité proximale 62 jusqu'à une extrémité distale 64. L'extrémité proximale 62 est montée, sans aucun degré de liberté, sur le support 50. À l'inverse, l'extrémité 64 se déplace par rapport au support 50. Ici, la lame 60 ne forme qu'un seul bloc continu de matière avec le support 50. Par exemple, à cet effet, la lame 60 et le support 50 sont fabriqués en même temps par impression 3D. Ici, la plaque 54 comporte un trou traversant 66 qui s'étend le long de l'axe 38 sous la lame 60 et dont la largeur est strictement supérieure à la largeur de la lame 60.

Entre les extrémités 62, 64, la lame 60 est cintrée et présente une face d'appui convexe 68 sur laquelle s'exerce directement la force d'appui à détecter. À cet effet, la largeur de la face 68 est supérieure à 0,8 cm ou 1 cm et généralement inférieure ou égale à 3 cm. Par exemple, la face 68 est symétrique par rapport à un plan vertical perpendiculaire à l'axe 38 et situé à mi-distance entre les extrémités 62 et 64.

Pour présenter une sensibilité accrue dans la direction de l'axe 38, la longueur L de la lame 60 entre ses extrémités 62 et 64 est supérieure à 6 cm ou 8 cm, c'est-à-dire typiquement au moins deux ou trois fois supérieure à la largeur de cette même lame. La longueur L est également généralement inférieure à 16 cm ou 12 cm.

Dans ce mode de réalisation, c'est la mousse du bloc 42 qui vient directement en appui conformationnel d'un côté sur la face 68 et, du côté opposé, sur une face inférieure de la plaque 54.

Le ressort 52 est déformable, par déformation élastique de la lame 60, entre une conformation cintrée représentée sur les figures 4 et 5 et une conformation plus aplatie. La conformation cintrée correspond à la conformation initiale de la lame 60, c'est-à-dire sa conformation en absence de force d'appui sur la face 14. Dans la conformation cintrée, la lame 60 présente une flèche f (figure 5). La flèche f est définie comme étant la distance entre le point de la lame 60 de plus haute altitude mesurée par rapport au plan horizontal contenant la face supérieure de la plaque 54. A titre d'illustration, la projection orthogonale de la face d'appui 68 sur un plan vertical parallèle à l'axe 38 forme un arc de cercle..

Dans la conformation aplatie, l'amplitude de la flèche f est plus petite que son amplitude dans la conformation cintrée. Par exemple, l'amplitude de la flèche f est une ou deux fois plus petite que dans la conformation cintrée. Si la force d'appui est extrêmement importante dans la conformation plus aplatie, l'amplitude de la flèche f peut être nulle.

Le dispositif 34 comporte aussi un mécanisme 72 de guidage en translation de l'extrémité 64 le long de l'axe 38. Plus précisément, ce mécanisme 72 empêche que la force verticale d'appui qui s'exerce directement sur la face 68 de la lame 60 fasse pivoter cette extrémité 64 autour d'un axe de rotation horizontale et perpendiculaire à l'axe 38 et passant par l'extrémité 62. Ce mécanisme 72 permet à l'extrémité 64 de se déplacer librement, par rapport au support 50, en coulissant le long de l'axe 38 dans un sens et, en alternance, dans le sens opposé. Dans ces conditions, à cause du mécanisme 72, la lame 60 convertit, à l'aide d'une seule pièce, la force d'appui verticale en un déplacement horizontal en translation de l'extrémité 64 le long de l'axe 38. L'axe de translation de l'extrémité 64 est donc confondu avec l'axe 38.

Le débattement maximal de l'extrémité 64 le long de l'axe 38 entre les conformations cintrée et plus aplatie est noté ΔL par la suite. Typiquement, le débattement ΔL est supérieur à 0,5 mm ou 1 mm ou 2 mm. Pour obtenir un débattement ΔL plus petit que la variation Δf de l'amplitude de la flèche f entre ses conformations cintrée et plus aplatie, dans la position cintrée, l'amplitude de la flèche f est inférieure ou égale L/2 ou L/3 et, de préférence, inférieure ou égale L/5 ou L/8. Grâce à cela, la détection d'un déplacement de l'extrémité 64 peut être réalisée sur une course plus petite et donc à l'aide d'un capteur plus petit.

Ici, le mécanisme 72 comporte un plan 74 d'appui horizontal et une butée 78 en appui glissant sur ce plan 74. Le plan 74 s'étend le long de l'axe 38 sur une longueur strictement supérieure au débattement ΔL pour que quelle que soit la conformation du ressort 52, la butée 78 puisse toujours reposer sur le plan d'appui 74.

Ici, le plan 74 est formé par la paroi supérieure plane d'un boîtier rigide d'un capteur 80. Le boîtier du capteur 80 est essentiellement parallélépipédique. La paroi inférieure de ce boîtier est montée, sans aucun degré de liberté, sur la face supérieure de la plaque 54.

Pour former la butée 78, l'extrémité 64 comporte :
- un pan 76 qui remonte verticalement pour passer au-dessus du niveau du plan 74, immédiatement suivi par
- un pan qui redescend pour que son extrémité vienne reposer, en appui glissant, sur le plan 74 même dans la conformation cintrée.

Ce pan qui redescend forme la butée 78. Ainsi, dans ce mode de réalisation, l'extrémité 64 est conformée pour former la butée 78.

Enfin, le dispositif 34 comporte le capteur 80 qui détecte si le déplacement de l'extrémité 64 franchit un seuil prédéterminé S₁. Pour limiter la hauteur du dispositif 34, le capteur 80 est monté, sans aucun degré de liberté, sur la face supérieure du support 50. Plus précisément, le capteur 80 se situe à côté de l'extrémité 64 dans le prolongement de la lame 60 et le long de l'axe 38. Dans ce mode de réalisation, le capteur 80 est un détecteur de proximité comportant une face sensible 82. Ici, le capteur 80 détecte la proximité du pan 76. À cet effet, la face sensible 82 est verticale et en vis-à-vis de ce pan 76.

Différentes technologies sont possibles pour réaliser la face sensible 82 qui détecte la proximité du pan 76 si celui-ci s'est déplacer d'une distance supérieure au seuil S₁. Par exemple, dans un mode de réalisation particulièrement simple et économe en énergie, le capteur 80 est un interrupteur et la face 82 est une extrémité d'un bouton poussoir de cet interrupteur. Ce capteur commute d'un état non-passant vers un état passant dès que le bouton poussoir est enfoncé. Dans la conformation cintrée, le pan 76 et la face 82 sont séparés par une distance égale au seuil S₁ et le capteur 80 est dans son état non-passant. Par exemple, dans l'état non-passant, le capteur 80 isole électriquement des fils 86 et 87. Lorsque la force d'appui déforme la lame 60, le pan 76 avance le long de l'axe 38 et fini par entrer en contact avec la face sensible 82 lorsqu'il a parcouru la distance S₁. En réponse, le capteur 80 commute vers son état passant et raccorde électriquement les fils 86 et 87 entre eux. Un tel changement de résistivité indique à l'électronique embarquée du véhicule 2 que le passager 6 est assis sur l'assise 10. En réponse, l'électronique embarquée autorise le déclenchement de l'airbag 36 en cas d'accident. Lorsque le passager 6 quitte le siège 4, la force d'appui disparaît. En réponse, la lame 60 revient automatiquement dans sa conformation cintrée et le pan 76 s'éloigne à nouveau de la face 82. Le capteur 80 revient automatiquement dans son état non-passant. Le dispositif 34 est donc revenu dans sa position initiale.

On notera que le seuil S₁ peut facilement être ajusté par différents moyens dont notamment :
- en ajustant la distance qui sépare la face sensible 82 du pan 76 dans la conformation cintrée, et/ou
- en ajustant la raideur de la lame 60, et/ou
- en ajustant la longueur L et la flèche f de la lame 60.

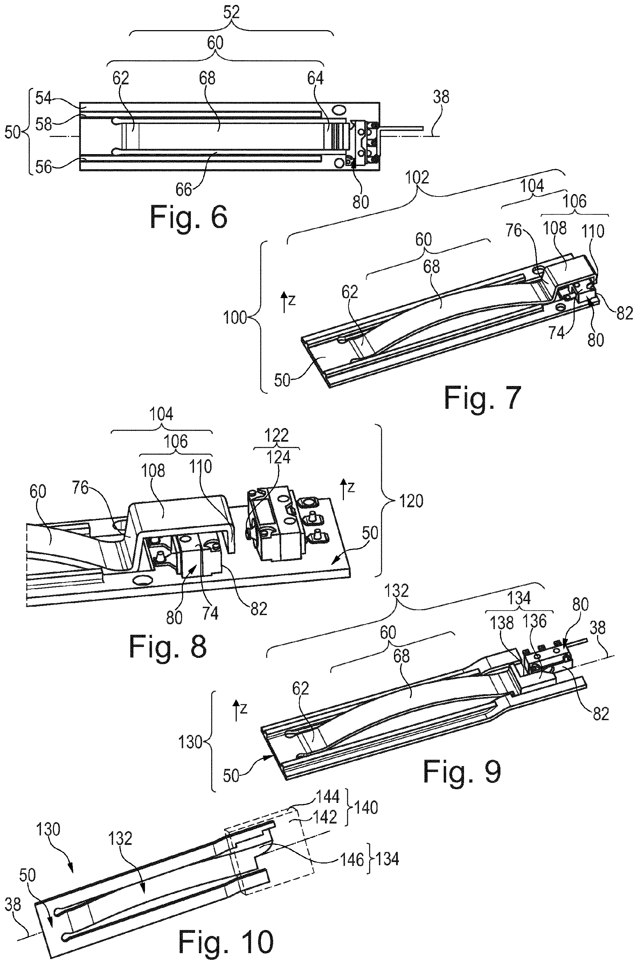

La figure 7 représente un dispositif 100 de détection susceptible d'être utilisé à la place du dispositif 34. Le dispositif 100 est identique au dispositif 34 sauf que le ressort à lame 52 est remplacé par un ressort à lame 102. Le ressort 102 est identique au ressort 52 sauf que l'extrémité 64 est remplacée par une extrémité 104. L'extrémité 104 est identique à l'extrémité 64 sauf que le pan 76 se prolonge par une équerre 106 qui comporte un pan horizontal 108 qui passe au-dessus du plan 74 puis un pan vertical 110 qui redescend verticalement après le capteur 80. Dans ce mode de réalisation, la face sensible 82 du capteur 80 est tournée du côté opposé à l'extrémité 62 pour se trouver en vis-à-vis du pan vertical 110. De plus, le capteur 80 est monté sur le support 50 de manière à ce que, dans la conformation cintrée, le pan 110 soit en appui sur la face sensible 82. Ainsi, dans ce mode de réalisation, dans la conformation cintrée, le capteur 80 est dans son état passant.

Le fonctionnement du dispositif 100 est le même que celui du dispositif 34 sauf que le capteur 80 est dans son état passant dans la conformation cintrée et commute vers son état non-passant en réponse à une force d'appui suffisante pour éloigner le pan 110 de la face sensible 82. De plus, dans ce mode de réalisation, la butée du mécanisme de guidage est formée par le pan 108 en appui glissant sur le plan 74 et non plus par le pan 78.

La figure 8 représente un dispositif 120 de détection susceptible d'être utilisé à la place du dispositif 100. Le dispositif 120 est identique au dispositif 100 sauf qu'il comporte en plus un capteur additionnel 122 monté, sans aucun degré de liberté, sur le support 50. Le capteur 122 est identique au capteur 80. Sa face sensible porte la référence 124. Ici, la face sensible 124 est en vis-à-vis de la face sensible 82 du capteur 80. Le pan vertical 110 est reçu entre les faces sensibles 82 et 124. Dans la conformation cintrée, la face sensible 124 est séparée du pan 110 par une distance non nulle supérieure au seuil S₂. Cette distance non nulle est choisie pour que le pan 110 entre en contact avec la face sensible 124 uniquement si la force d'appui exercée sur la face 68 dépasse un second seuil prédéterminé S₂.

Le fonctionnement du dispositif 122 est le même que celui du dispositif 100 sauf que, en plus, si la force d'appui dépasse le seuil S₂, le capteur 122 détecte le franchissement de ce seuil S₂ et commute de son état non-passant vers son état passant. Ainsi, le capteur 120 est capable de détecter le franchissement du seuil S₁ puis du seuil S₂ par la force d'appui.

Les figures 9 et 10 représentent un dispositif 130 de détection susceptible d'être utilisé à la place du dispositif 34. Le dispositif 130 est identique au dispositif 34 sauf que :
- le ressort à lame 52 est remplacé par un ressort à lame 132, et
- le capteur 80 est pivoté de 90 degrés autour d'un axe vertical de sorte que sa face sensible 82 s'étend dans un plan vertical parallèle à l'axe 38.

Le ressort 132 est identique au ressort 52 sauf que l'extrémité 64 est remplacée par une extrémité 134. L'extrémité 134 comporte un prolongement 136 qui présente une paroi verticale 138 qui s'étend le long de l'axe 38. La paroi verticale 138 s'étend en vis-à-vis de la face sensible 82 du capteur 80. De préférence, l'extrémité du prolongement 136 est biseautée pour enfoncer l'extrémité du bouton poussoir qui constitue la face sensible 82 dans une direction perpendiculaire à la paroi verticale 138. Ainsi, dans ce mode de réalisation, le prolongement 136 peut se déplacer au-delà du capteur 80 sans qu'il vienne en butée sur ce capteur. Le réglage du débattement de l'extrémité 134 peut donc être moins précis que dans le cas du dispositif 34.

Dans ce mode de réalisation, le plan d'appui 74 n'est pas utilisé pour guider en translation l'extrémité 134. À la place, le mécanisme de guidage comporte un boîtier parallélépipédique 140 représenté en pointillé sur la figure 10. Ce boîtier 140 est solidaire du support 50. Plus précisément, le boîtier 140 comporte une paroi plane inférieure 142 et une paroi plane supérieure 144 reliées mécaniquement l'une à l'autre par des parois latérales verticales. Les parois 142 et 144 passent, respectivement, dessous et dessus le support 50 et l'extrémité 134. Ainsi, dans ce mode de réalisation le mécanisme de guidage en translation de l'extrémité 134 comporte :
- la paroi inférieure 142 dont la face supérieure forme le plan d'appui du mécanisme de guidage, et
- une face inférieure 146 de l'extrémité 134 qui forme la butée de ce mécanisme de guidage. En effet, cette face 146 glisse sur le plan d'appui lorsque le ressort 132 se déforme entre ses conformations cintrée et plus aplatie.

Dans ce mode de réalisation, le capteur 80 est également logé à l'intérieur du boîtier 140 et fixé sans aucun degré de liberté, par exemple, à la paroi 142 de ce boîtier. Ainsi, lors de la fabrication du dispositif 130, la position du capteur 80 le long de l'axe 38 est facilement ajustée en faisant plus ou moins coulisser le boîtier 140 le long de cet axe 38. Cela permet donc d'ajuster simplement le seuil S₁ et donc la sensibilité du dispositif 130. Ensuite, lorsque le boîtier 140 est à la position souhaitée, il peut être verrouillé dans cette position par exemple à l'aide d'un point de colle ou similaire.

Le fonctionnement du dispositif 130 se déduit du fonctionnement du dispositif 34.

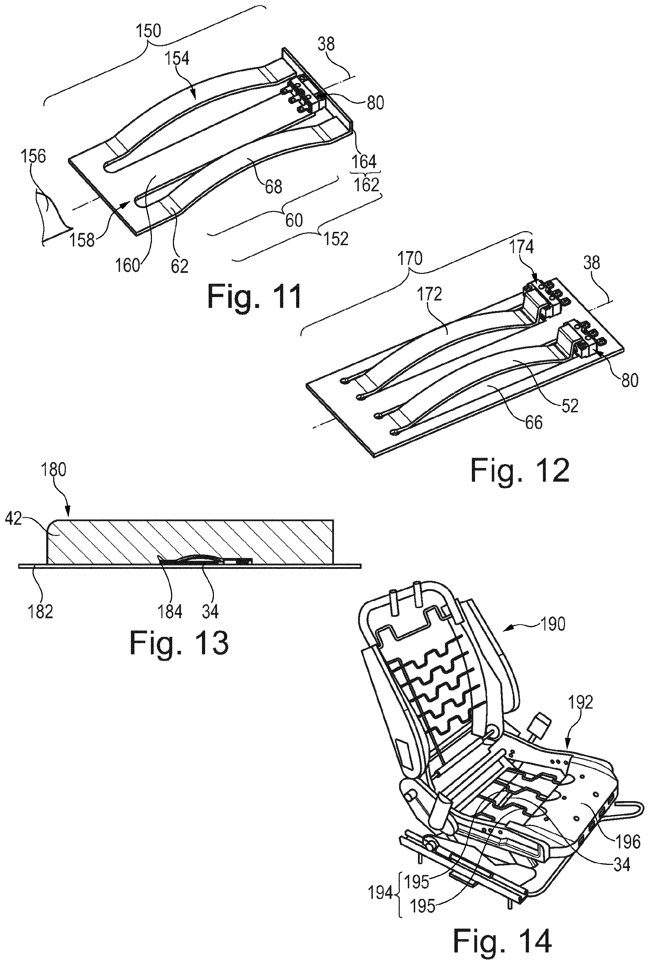

La figure 11 représente un dispositif 150 susceptible d'être utilisé à la place du dispositif 34. Ce dispositif 150 est identique au dispositif 34 sauf que :
- le ressort à lame 52 est remplacé par deux ressorts à lame 152 et 154 symétriques l'un de l'autre par rapport à un plan vertical médian 156 contenant l'axe 38, et
- le support 50 est remplacé par un support 158 également symétrique par rapport à ce plan 156.

Le support 158 comporte un bras rigide 160 qui s'étend le long de l'axe 38 et à l'extrémité duquel est fixé, sans aucun degré de liberté, le capteur 80.

Le ressort 152 est identique au ressort 52 sauf que l'extrémité 64 est remplacée par une extrémité 162. L'extrémité 162 comporte un pan vertical 164 qui s'étend perpendiculairement à l'axe 38. Ce pan vertical 164 relie entre elles les extrémités distales des ressorts 152 et 154.

La face sensible 82 du capteur 80 est en vis-à-vis du pan vertical 164. Ici, dans la conformation cintrée, le pan vertical 164 est en appui sur la face sensible 82 de sorte que le capteur 80 est dans son état passant. Lorsqu'une force d'appui aplatie au moins l'un des ressorts 152 ou 154, le pan vertical 164 s'éloigne de la face sensible 82 et le capteur 80 commute vers son état non-passant.

Le fonctionnement du dispositif 150 est similaire à celui décrit pour le dispositif 100. Toutefois, la présence de deux lames disposées l'une à côté de l'autre dans une direction horizontale perpendiculaire à l'axe 38 accroît la sensibilité du dispositif 150 dans cette direction.

Pour simplifier la figure 11, le mécanisme de guidage des extrémités distales libres des ressorts 152 et 154 n'a pas été représenté. Ce mécanisme de guidage est, par exemple, similaire à celui décrit en référence à la figure 10.

La figure 12 représente un dispositif 170 susceptible d'être utilisé à la place du dispositif 34. Le dispositif 170 est identique au dispositif 34 sauf qu'il comporte :
- en plus du ressort 52, un ressort à lame 172 supplémentaire, et
- en plus du capteur 80, un capteur supplémentaire 174.

Les ressorts 172 et 52 sont disposés de façon symétrique, par rapport à un plan vertical contenant l'axe 38. De même, les capteurs 80 et 174 sont disposés de façon symétrique, par rapport à ce même plan vertical contenant l'axe 38.

Le ressort 172 fonctionne avec le capteur 174 pour détecter qu'une force d'appui dépasse un seuil prédéterminé S₂. Sur ce point, le fonctionnement est le même que celui décrit avec le ressort 52 et le capteur 80. Toutefois, ici, le seuil S₂ est différent du seuil S₁. À cet effet, par exemple :
- la conformation cintrée du ressort 172 est différente de la configuration cintrée du ressort 52. Par exemple, la flèche et/ou la longueur du ressort 172 est différente du celle du ressort 52, et/ou
- la raideur du ressort 172 est différente de celle du ressort 52, et/ou
- la sensibilité du capteur 174 est différente de celle du capteur 80.

Ainsi, le dispositif 170 permet de détecter le franchissement de deux seuils différents S₁ et S₂ par la force d'appui.

Dans le mode de réalisation de la figure 12, les lames des ressorts 52 et 172 ne forment qu'un seul bloc continu de matière avec le même support rigide.

La figure 13 représente une assise 180 susceptible d'être utilisée à la place de l'assise 10. L'assise 180 est identique à l'assise 10 sauf que le bloc 42 de mousse repose sur une plaque rigide 182 et que le logement 40 est remplacé par un logement 184. Le logement 184 est identique au logement 40 sauf qu'il est situé à l'interface entre le bloc 42 de mousse et la plaque rigide 182. Dans ces conditions, la face inférieure du dispositif 34 repose directement sur la plaque 182.

La figure 14 représente une autre façon possible d'installer le dispositif 34 dans un siège 190. Le siège 190 comporte une assise 192. L'assise 192 comporte un bloc de mousse qui repose sur une nappe 194 de suspension. Dans cette figure, le bloc de mousse n'a pas été représenté pour rendre visible la nappe 194. Typiquement, la nappe 194 comporte des fils en acier 195 tendus sur une armature rigide 196 et le bloc de mousse repose sur ces fils 195. Dans ce cas, le dispositif 34 est par exemple fixé et tendu entre deux fils 195 de la nappe 194. Ainsi, le dispositif 34 se retrouve, comme dans le mode de réalisation de la figure 13, logé sous le bloc de mousse.

De nombreux autres modes de réalisation sont possibles. Par exemple, le support 50 n'est pas nécessairement plan. Par exemple, pour faciliter la fixation du support à l'intérieur d'un renfoncement, celui-ci peut être bombé dans le même sens que la lame 60 ou dans le sens opposé.

En variante, le support 50 n'est pas rigide en flexion. Par exemple, le support est un fil ou une bande souple en flexion et seulement rigide en traction qui retient le capteur 80 immobile en translation par rapport à l'extrémité 62 le long de l'axe 38. Par exemple, à cet effet, ce support souple est fixé, d'un côté, à l'extrémité 62 et, de l'autre côté, au capteur 80. Lors de son utilisation, ce support souple repose par exemple sur le fond du logement 40. Ce support souple peut alors se déformer en flexion en réponse à la force d'appui. Cela permet, par exemple, de rendre la présence du dispositif de détection à l'intérieur de l'assise encore moins détectable par palpation que dans le cas où le support est rigide en flexion.

Dans une autre variante, le support 50 est confondu avec la plaque 182 de l'assise 180.

Le support et la lame peuvent être fabriqués indépendamment l'un de l'autre puis montés l'un sur l'autre par un moyen d'assemblage tel qu'une vis, de la colle ou un point de soudure.

En variante, les nervures 56 et 58 sont omises ou, au contraire, des nervures supplémentaires sont ajoutées pour augmenter la rigidité en flexion du support rigide.

Dans un mode de réalisation plus complexe, la lame est formée de plusieurs lamelles empilées les unes sur les autres dans la direction d'enfoncement.

En variante, l'extrémité libre de la lame est située dans un plan horizontal situé au-dessus ou en dessous du plan horizontal dans lequel est situé l'extrémité proximale.

Le ressort à lame peut être remplacé par une lame souple et un ressort indépendant de la lame. Ce ressort indépendant coopère avec la lame pour la ramener automatiquement dans sa conformation cintrée dès que la force d'appui disparaît. Par exemple, ce ressort indépendant est celui qui repousse le bouton poussoir du capteur 80 vers sa position saillante. Dans ce cas, la course du bouton poussoir est suffisamment longue pour qu'il soit en permanence en appui mécanique sur l'extrémité distale de la lame aussi bien dans sa conformation cintrée que dans sa conformation plus aplatie. Dès que la force d'appui disparaît, le ressort indépendant ramène le bouton poussoir vers sa position initiale ce qui ramène en même temps la lame dans sa conformation cintrée. Le ressort indépendant peut aussi être interposé entre la partie convexe de la lame et le support 50 de manière à solliciter en permanence la lame vers sa conformation cintrée. Dans ce dernier cas le ressort est par exemple un morceau de matériau élastomère. Dans le cas où un ressort indépendant est utilisé, la lame souple peut être dépourvue d'élasticité, c'est-à-dire qu'elle est incapable d'emmagasiner suffisamment d'énergie potentiel lors de sa déformation depuis sa conformation cintrée jusqu'à sa conformation plus aplatie pour revenir automatiquement, sans apport d'énergie extérieur, dans sa conformation cintrée initiale dès que la force d'appui a disparu.

La lame 60 peut avoir de nombreuses formes différentes. Par exemple, en variante, la projection orthogonale de la lame sur un plan vertical forme une portion d'une ellipse dont l'axe focal est parallèle à l'axe 38 et dont l'excentricité est, par exemple, inférieure à 0,2 ou 0,1. Dans une autre variante, la même lame comporte plusieurs faces d'appui convexes disposées les unes après les autres le long de l'axe 38. Ce mode de réalisation peut être obtenu en raccordant mécaniquement les unes après les autres le long de l'axe 38 plusieurs exemplaires de la lame 60.

D'autres modes de réalisation du mécanisme de guidage sont possibles. Par exemple, le mécanisme de guidage comporte un ou plusieurs rails à l'intérieur desquels l'extrémité 64 peut coulisser uniquement le long de l'axe 38.

Dans un autre mode de réalisation, c'est la face supérieure de la plaque 54 qui forme le plan d'appui du mécanisme de guidage. Pour cela, par exemple, le trou 66 est supprimé en totalité ou en partie de manière à ce que, en réponse à la force d'appui, la partie inférieure du pan 76 de l'extrémité 64 repose directement sur la face supérieure de la plaque 54. Dans ce cas, c'est cette partie inférieure du pan 76 qui forme la butée du mécanisme de guidage. Le pan 78 peut alors être omis. Il est aussi possible de remplacer les pans 76 et 78 par un seul pan qui s'étend verticalement depuis la face d'appui 68 jusqu'à une partie inférieure en appui glissant sur la face supérieure de la plaque 54. C'est alors ce pan vertical qui forme la butée du mécanisme de guidage. Dans ces deux derniers modes de réalisation, le plan 74 d'appui n'est pas formé par une paroi du boîtier du capteur 80 mais directement par la face supérieure de la plaque 54.

Dans d'autres modes de réalisation, le plan d'appui 74 est aménagé sur l'extrémité 64 et la butée en appui glissant sur ce plan d'appui est aménagée sur le support rigide 50.

D'autres technologies de capteur peuvent être utilisées pour détecter le déplacement de l'extrémité 64. Par exemple, la face sensible peut utiliser une technologie capacitive ou magnétique pour détecter la proximité du pan 76.

En variante, le capteur est remplacé par un capteur qui mesure la pression exercée par l'extrémité 64 ou qui mesure le déplacement de cette extrémité. Dans ce cas, en plus de détecter la présence ou l'absence d'une force d'appui, le dispositif fournit aussi une information sur l'amplitude de la force d'appui ou la vitesse de déplacement de la charge qui provoque cette force d'appui.

Dans un autre mode de réalisation le capteur 80 est remplacé par un capteur qui mesure la déformation de la lame. A cet effet, le capteur de déformation est par exemple fixé directement sur ou sous la face 68 de la lame 50 comme décrit dans la demande WO99/41565A. Le capteur de déformation peut aussi être réalisé comme décrit dans les demandes DE102013213672A1 ou WO0218892A2. En effet, l'utilisation d'une lame dont l'une des extrémités coulisse librement par rapport au support, permet toujours d'avoir une déformation plus importante de la lame que si les deux extrémités de cette lame étaient fixées sans aucun degré de liberté au support.

Le capteur 80 n'est pas obligatoirement situé à côté de l'extrémité 64. Par exemple, un mécanisme de transmission du déplacement de l'extrémité 64 peut être interposé entre cette extrémité et le capteur 80. Un tel mécanisme de transmission comporte, par exemple, un câble ou une tige qui relie mécaniquement l'extrémité 64 à la face sensible 82 du capteur 80. Grâce à un tel mécanisme de transmission, le capteur 80 peut être éloigné autant que souhaité de l'extrémité 64.

Le dispositif de détection peut être utilisé dans de nombreuses autres applications. Par exemple, il peut être utilisé pour détecter l'écrasement d'un matériau souple tel qu'un joint souple entre deux armatures rigides. Dans ce cas, par exemple, le dispositif de détection est interposé entre l'une de ces armatures rigides et le joint souple. Dès lors, lorsque le joint souple est écrasé par l'autre armature, le joint souple écrase la lame 60. Cette déformation de la lame 60 est alors détectée comme décrit précédemment. Par exemple, l'une de ces armatures est le montant d'une porte et l'autre armature est le battant de cette même porte. Dans ce cas, le dispositif de détection peut être utilisé pour détecter l'ouverture et la fermeture de cette porte.

Le dispositif de détection décrit ici peut aussi être utilisé pour détecter la fin de course d'un objet en matériau dur qui se déplace. Par exemple, cet objet dur peut être une porte coulissante ou une pièce mécanique.

Le positionnement dans un quart arrière de l'assise décrit dans le cas particulier du dispositif 34 peut être mis en œuvre avec tout autre type de dispositif apte à détecter une force d'appui exercée dans une direction d'enfoncement. En particulier, il n'est pas nécessaire que ce dispositif soit l'un de ceux précédemment décrits et qu'il comporte une lame telle que la lame 60.

## Revendications

1. Dispositif (34 ; 100 ; 120 ; 130 ; 150 ; 170) apte à détecter une force d'appui exercée dans une direction d'enfoncement, ce dispositif comportant :
- un support (50 ; 158) rigide en traction,
- au moins une lame (60) qui s'étend depuis une extrémité proximale (62) montée sur le support, jusqu'à une extrémité distale libre (64 ; 104 ; 134 ; 162), cette lame étant déformable élastiquement par la force d'appui depuis :
• une conformation cintrée dans laquelle la lame présente une face d'appui (68) convexe sur laquelle s'exerce directement la force d'appui à détecter,
• jusqu'à une conformation plus aplatie dans laquelle la face d'appui convexe est plus aplatie,
- un ressort (52 ; 102 ; 132 ; 152, 154 ; 172) apte à solliciter en permanence la lame vers sa conformation cintrée de manière à ce que, après disparition de la force d'appui, la lame retrouve automatiquement sa conformation cintrée,
- un mécanisme (72) de guidage également monté sur le support et apte, en réponse à la déformation de la lame, à guider l'extrémité distale libre de la lame en translation le long d'un axe (38) de translation perpendiculaire à la direction d'enfoncement,
- un capteur (80 ; 122 ; 174) apte à détecter un déplacement de l'extrémité distale libre le long de l'axe de translation pour détecter la force d'appui,
• ce capteur étant fixé à l'extrémité proximale sans aucun degré de liberté en translation le long de l'axe de translation, ou
• ce capteur étant directement fixé sur ou sous la lame (60) et ce capteur étant apte à mesurer la déformation de cette lame.

2. Dispositif selon la revendication 1, dans lequel la lame et le ressort sont réalisés à l'aide d'un même ressort à lame (52 ; 102 ; 132 ; 152, 154 ; 172).

3. Dispositif selon l'une quelconque des revendications précédentes, dans lequel le capteur (80 ; 122 ; 174) est monté sur le support à côté de la lame dans une direction perpendiculaire à la direction d'enfoncement.

4. Dispositif selon l'une quelconque des revendications précédentes, dans lequel le rapport f/L est inférieur ou égal à 0,5 où :
- f est l'amplitude de la flèche de la face d'appui (68) dans sa conformation cintrée, et
- L est la longueur de la lame entre ses extrémités proximale et distale.

5. Dispositif selon l'une quelconque des revendications précédentes, dans lequel le support (50 ; 158) s'étend principalement dans un plan perpendiculaire à la direction d'enfoncement.

6. Dispositif selon l'une quelconque des revendications précédentes, dans lequel le mécanisme (72) de guidage comporte :
- un plan (74 ; 142) d'appui solidaire de l'un du support et de la lame, ce plan d'appui s'étendant perpendiculairement à la direction d'enfoncement et le long de l'axe de translation sur une longueur supérieure ou égale au débattement en translation de l'extrémité distale entre les conformations cintrée et plus aplatie de la lame, et
- une butée (74 ; 108) solidaire de l'autre du support et de la lame, cette butée étant en appui glissant sur le plan d'appui.

7. Dispositif selon l'une quelconque des revendications précédentes, dans lequel dans sa conformation cintrée, la distance la plus courte entre les extrémités proximale et distale est supérieure à 7 cm.

8. Dispositif selon l'une quelconque des revendications précédentes, dans lequel le mécanisme (72) de guidage permet à l'extrémité distale libre de se déplacer en translation le long de l'axe (38) de translation indépendamment du support (50 ; 158).

9. Assise d'un siège, cette assise comportant :
- un bloc (42) de mousse,
- une face supérieure (14) extérieure située au dessus du bloc de mousse et sur laquelle s'assoit directement un occupant du siège,
- un dispositif (34 ; 100 ; 120 ; 130 ; 150 ; 170) apte à détecter une force d'appui exercée sur la face supérieure de l'assise dans une direction d'enfoncement perpendiculaire à la face supérieure,
**caractérisé en ce que** le dispositif apte à détecter la force d'appui est conforme à l'une quelconque des revendications précédentes.

10. Assise selon la revendication 9, dans laquelle :
- l'assise comporte un logement (40) creusé à l'intérieur du bloc de mousse et situé à au moins 1 cm au-dessous de la face supérieure et à au moins 1 cm au-dessus d'une face inférieure du bloc de mousse située du côté opposé à la face supérieure, et
- le dispositif (34 ; 100 ; 120 ; 130 ; 150 ; 170) apte à détecter la force d'appui est situé à l'intérieur de ce logement.

11. Siège, **caractérisé en ce qu'**il comporte :
- au moins une assise (10-12) conforme à l'une quelconque des revendications 9 à 10,
- un dossier (13) situé du côté d'un bord arrière de l'assise, et dans lequel :
- la face supérieure (14) de l'assise s'étend principalement le long d'un plan appelé « plan de l'assisse »,
- le rectangle de plus petit surface qui contient entièrement la projection orthogonale de la face supérieure dans le plan de l'assise, comporte :
• un côté arrière (18) situé du côté du bord arrière de l'assise ,
• un côté avant (20) situé du côté opposé au côté arrière, et
• un premier et une second côtés latéraux (22, 24) reliant chacun les côtés avant et arrière,
- les projections orthogonales des extrémités proximale et distale de la lame dans le plan de l'assise sont situées sur un axe incliné qui passe par des points A et B du plan de l'assise, le point A étant situé à une distance inférieure ou égale à 0,2dₐᵣ de l'intersection entre le côté arrière et le premier côté latérale et le point B étant situé à une distance inférieure ou égale à 0,2dₐᵣ du centre du rectangle, où la distance dₐᵣ est la distance la plus courte qui sépare les deux côtés latéraux.

## Patentansprüche

1. Vorrichtung (34; 100; 120; 130; 150; 170) zur Erkennung einer Auflagekraft, die in einer Eindrückrichtung ausgeübt wird, diese Vorrichtung aufweisend:
- einen zugstarren Träger (50; 158),
- mindestens ein Blatt (60), das sich von einem proximalen Ende (62), das auf dem Träger montiert ist, bis zu einem freien distalen Ende (64; 104; 134; 162) erstreckt, wobei dieses Blatt durch die Auflagekraft wie folgt elastisch verformt werden kann:
• von einer gewölbten Ausbildung, bei welcher das Blatt eine konvexe Auflagefläche (68) aufweist, auf welche die zu erkennende Auflagekraft direkt wirkt,
• zu einer abgeflachteren Ausbildung, bei welcher die konvexe Auflagefläche abgeflachter ist,
- eine Feder (52; 102; 132; 152, 154; 172), die geeignet ist, das Blatt dauerhaft in seine gewölbte Ausbildung vorzuspannen, damit das Blatt nach Wegfall der Auflagekraft automatisch seine gewölbte Ausbildung zurückerhält,
- einen Führungsmechanismus (72), der ebenfalls auf dem Träger montiert ist und geeignet ist, in Reaktion auf die Verformung des Blatts das freie distale Ende des Blatts translatorisch entlang einer Translationsachse (38) zu führen, die senkrecht zur Eindrückrichtung verläuft,
- einen Sensor (80; 122; 174) der geeignet ist, eine Verschiebung des freien distalen Endes entlang der Translationsachse zu erkennen, um die Auflagekraft zu erkennen,
• wobei dieser Sensor ohne translatorischen Freiheitsgrad entlang der Translationsachse am proximalen Ende befestigt ist, oder
• dieser Sensor direkt auf oder unter dem Blatt (60) befestigt ist und dieser Sensor geeignet ist, die Verformung dieses Blatts zu messen.

2. Vorrichtung nach Anspruch 1, wobei das Blatt und die Feder mithilfe einer selben Blattfeder (52; 102; 132; 152, 154; 172) hergestellt sind.

3. Vorrichtung nach einem der vorhergehenden Ansprüche, wobei der Sensor (80; 122; 174) an dem Träger neben dem Blatt in einer Richtung senkrecht zur Eindrückrichtung montiert ist.

4. Vorrichtung nach einem der vorhergehenden Ansprüche, wobei das Verhältnis f/L kleiner oder gleich 0,5 ist, wobei:
- f die Amplitude der Durchbiegung der Auflagefläche (68) in ihrer gewölbten Ausbildung ist, und
- L die Länge des Blatts zwischen seinem proximalen und distalen Ende ist.

5. Vorrichtung nach einem der vorhergehenden Ansprüche, wobei sich der Träger (50; 158) hauptsächlich in einer Ebene senkrecht zur Eindrückrichtung erstreckt.

6. Vorrichtung nach einem der vorhergehenden Ansprüche, wobei der Führungsmechanismus (72) Folgendes aufweist:
- eine Auflageebene (74; 142), die mit einem von dem Träger und dem Blatt fest verbunden ist, wobei sich diese Auflageebene senkrecht zur Eindrückrichtung und entlang der Translationsachse auf einer Länge erstreckt, die größer als oder gleich dem Translationsausschlag des distalen Endes zwischen der gewölbten und der abgeflachteren Ausbildung des Blatts ist, und
- einen Anschlag (74; 108), der mit dem anderen von dem Träger und dem Blatt fest verbunden ist, wobei dieser Anschlag gleitend auf der Auflageebene aufliegt.

7. Vorrichtung nach einem der vorhergehenden Ansprüche, wobei in seiner gewölbten Ausbildung der kürzeste Abstand zwischen dem proximalen und dem distalen Ende mehr als 7 cm beträgt.

8. Vorrichtung nach einem der vorhergehenden Ansprüche, wobei es der Führungsmechanismus (72) dem freien distalen Ende erlaubt, sich unabhängig von dem Träger (50; 158) translatorisch entlang der Translationsachse (38) zu bewegen.

9. Sitzfläche eines Sitzes, diese Sitzfläche aufweisend:
- einen Schaumstoffblock (42),
- eine äußere Oberseite (14), die sich über dem Schaumstoffblock befindet und auf die sich ein Insasse des Sitzes direkt setzt,
- eine Vorrichtung (34; 100; 120; 130; 150; 170) zur Erkennung einer Auflagekraft, die auf die Oberseite der Sitzfläche in einer Eindrückrichtung senkrecht zur Oberseite ausgeübt wird,
**dadurch gekennzeichnet, dass** die Vorrichtung zur Erkennung der Auflagekraft einem der vorhergehenden Ansprüche entspricht.

10. Sitzfläche nach Anspruch 9, wobei:
- die Sitzfläche eine Aufnahme (40) aufweist, die in dem Schaumstoffblock vertieft ausgebildet ist und sich mindestens 1 cm unter der Oberseite und mindestens 1 cm über einer Unterseite des Schaumstoffblocks befindet, die sich auf der Seite gegenüber der Oberseite befindet, und
- sich die Vorrichtung (34; 100; 120; 130; 150; 170) zur Erkennung der Auflagekraft innerhalb dieser Aufnahme befindet.

11. Sitz, **dadurch gekennzeichnet, dass** er Folgendes aufweist:
- mindestens eine Sitzfläche (10-12) nach einem der Ansprüche 9 bis 10,
- eine Rücklehne (13), die sich auf der Seite eines hinteren Rands der Sitzfläche befindet, und wobei:
- sich die Oberseite (14) der Sitzfläche hauptsächlich entlang einer Ebene erstreckt, die "Ebene der Sitzfläche" genannt wird,
- das Rechteck mit der kleinsten Fläche, das die Orthogonalprojektion der Oberseite in der Ebene der Sitzfläche vollständig enthält, Folgendes aufweist:
• eine Hinterseite (18), die sich auf der Seite des hinteren Rands der Sitzfläche befindet,
• eine Vorderseite (20), die sich auf der Seite gegenüber der Hinterseite befindet, und
• eine erste und eine zweite seitliche Seite (22, 24), die jeweils die Vorder- und Hinterseite verbinden,
- sich die Orthogonalprojektionen des proximalen und distalen Endes des Blatts in der Ebene der Sitzfläche auf einer geneigten Achse befinden, die durch die Punkte A und B der Ebene der Sitzfläche läuft, wobei sich der Punkt A in einem Abstand kleiner oder gleich 0,2dₐᵣ von der Überschneidung zwischen der Hinterseite und der ersten seitlichen Seite befindet und sich der Punkt B in einem Abstand kleiner oder gleich 0,2dₐᵣ vom Mittelpunkt des Rechtecks befindet, wobei dₐᵣ der kürzeste Abstand ist, der sie zwei seitlichen Seiten trennt.

## Claims

1. Device (34; 100; 120; 130; 150; 170) capable of detecting a bearing force exerted in a direction of indentation, this device comprising:
- a support (50; 158) rigid by tension,
- at least one plate (60) which extends from a proximal end (62) mounted on the support, to a free distal end (64; 104; 134; 162), this plate being elastically deformable by the bearing force from:
• a bent conformation in which the plate exhibits a convex bearing face (68) on which the bearing force to be detected is directly exerted,
• to a more flattened conformation in which the convex bearing face is more flattened,
- a spring (52; 102; 132; 152, 154; 172) capable of permanently straining the plate to its bent conformation such that, after disappearance of the bearing force, the plate automatically reverts to its bent conformation,
- a guiding mechanism (72) also mounted on the support and capable, in response to the deformation of the plate, of guiding the free distal end of the plate in translation along a translation axis (38) at right angles to the direction of indentation,
- a sensor (80; 122; 174) capable of detecting a displacement of the free distal end along the translation axis to detect the bearing force,
• this sensor being fixed to the proximal end with no degree of freedom in translation along the translation axis, or
• this sensor being directly fixed on or under the plate (60) and this sensor being capable of measuring the deformation of this plate.

2. Device according to Claim 1, in which the plate and the spring are produced using one and the same plate spring (52; 102; 132; 152, 154; 172).

3. Device according to either one of the preceding claims, in which the sensor (80; 122; 174) is mounted on the support alongside the plate in a direction at right angles to the direction of indentation.

4. Device according to any one of the preceding claims, in which the ratio f/L is less than or equal to 0.5, where:
- f is the amplitude of the deflection of the bearing face (68) in its bent conformation, and
- L is the length of the plate between its proximal and distal ends.

5. Device according to any one of the preceding claims, in which the support (50; 158) extends primarily in a plane at right angles to the direction of indentation.

6. Device according to any one of the preceding claims, in which the guiding mechanism (72) comprises:
- a bearing plane (74; 142) secured to one of the support and the plate, this bearing plane extending at right angles to the direction of indentation and along the translation axis over a length greater than or equal to the translational travel of the distal end between the bent and more flattened conformations of the plate, and
- an abutment (74; 108) secured to the other of the support and the plate, this abutment slidingly bearing on the bearing plane.

7. Device according to any one of the preceding claims, in which, in its bent conformation, the shortest distance between the proximal and distal ends is greater than 7 cm.

8. Device according to any one of the preceding claims, in which the guiding mechanism (72) allows the free distal end to be displaced in translation along the translation axis (38) independently of the support (50; 158).

9. Bottom rest of a seat, this bottom rest comprising:
- a foam block (42),
- an outer top face (14) situated above the foam block and on which an occupant of the seat directly sits,
- a device (34; 100; 120; 130; 150; 170) capable of detecting a bearing force exerted on the top face of the bottom rest in a direction of indentation at right angles to the top face,
**characterized in that** the device capable of detecting the bearing force conforms to any one of the preceding claims.

10. Bottom rest according to Claim 9, in which:
- the bottom rest comprises a housing (40) hollowed out inside the foam block and situated at least 1 cm below the top face and at least 1 cm above a bottom face of the foam block situated on the side opposite the top face, and
- the device (34; 100; 120; 130; 150; 170) capable of detecting the bearing force is situated inside this housing.

11. Seat, **characterized in that** it comprises:
- at least one bottom rest (10-12) according to either one of Claims 9 to 10,
- a back rest (13) situated on the side of a rear edge of the bottom rest, and in which:
- the top face (14) of the bottom rest extends primarily along a plane called "bottom rest plane",
- the rectangle of smallest surface area which entirely contains the orthogonal projection of the top face in the bottom rest plane, comprises:
• a rear side (18) situated on the side of the rear edge of the bottom rest,
• a front side (20) situated on the side opposite the rear side, and
• a first and a second lateral side (22, 24) each linking the front and rear sides,
- the orthogonal projections of the proximal and distal ends of the plate in the plane of the bottom rest are situated on an inclined axis which passes through points A and B of the bottom rest plane, the point A being situated at a distance less than or equal to 0.2 dₐᵣ from the intersection between the rear side and the first lateral side and the point B being situated at a distance less than or equal to 0.2dₐᵣ from the centre of the rectangle, where the distance dₐᵣ is the shortest distance which separates the two lateral sides.
